(19) Europäisches Patentamt / European Patent Office / Office européen des brevets

(11) **EP 1 627 799 B1**

(12) **EUROPEAN PATENT SPECIFICATION**

(45) Date of publication and mention
of the grant of the patent:
**19.12.2012 Bulletin 2012/51**

(51) Int Cl.:
***B62D 15/02*** *(2006.01)*

(21) Application number: **05106238.8**

(22) Date of filing: **08.07.2005**

(54) **Electric power steering apparatus**

Erkennung der Lenkmittellage

Détermination de la position neutre d'un système de direction

(84) Designated Contracting States:
**DE FR**

(30) Priority: **20.08.2004 JP 2004240304**

(43) Date of publication of application:
**22.02.2006 Bulletin 2006/08**

(73) Proprietors:
• **NSK LTD.**
**Shinagawa-ku,**
**Tokyo 141-8560 (JP)**
• **NSK Steering Systems Co., Ltd.**
**Shinagawa-ku,**
**Tokyo 141-8560 (JP)**

(72) Inventor: **Hara, Takeshi**
**Maebashi-Shi**
**Gunma 371-8527 (JP)**

(74) Representative: **Hooiveld, Arjen Jan Winfried**
**Arnold & Siedsma**
**Sweelinckplein 1**
**2517 GK Den Haag (NL)**

(56) References cited:
**EP-A- 1 288 629** **EP-A2- 0 460 582**
**EP-A2- 0 546 789** **EP-A2- 0 732 252**
**DE-A1- 10 244 070**

**Description**

**BACKGROUND OF THE INVENTION**

1. Field of the Invention

The present invention relates to an electric power steering apparatus, and in particular to an electric power steering apparatus that can estimate a neutral steering angle of a steering wheel correctly.

2. Prior Art

It is important for control of a vehicle to detect a steering angle, in particular, a neutral position (a neutral steering angle) of a steering wheel of the vehicle correctly. Thus, conventionally, it has been attempted to detect a neutral steering angle correctly with various methods. For example, in the Japanese patent No.3235521 B2, a device detects that a vehicle is traveling straight using a vehicle speed and a yaw rate and calculates a learning degree according to the vehicle speed and time under the straight traveling state to carry out correction of a neutral steering angle. A characteristic of the learning is that reliability $\alpha$ is set according to the vehicle speed, a correction coefficient $\alpha/Cv$ for reflecting a new neutral steering angle during judgment on the straight traveling is set, and correction of a neutral angle is executed on the basis of the correction coefficient $\alpha/Cv$.

However, the correction coefficient has an advantage that the new neutral angles are reflected more as the vehicle speed is higher and new steering angles are reflected less as the reliability in the past is higher. Therefore, there is a problem in that the correction becomes reflected less gradually when a vehicle travel straight at the same speed. In addition, in the method described above, although the judgment on the straight traveling is performed using a yaw rate, there is also a problem in that it is necessary to use information other than information of an electric power steering apparatus.

SUMMARY OF THE INVENTION

The present invention has been devised in view of the circumstances described above and it is an object of the invention to provide an electric power steering apparatus that can detect straight traveling surely without using a special sensor or the like and can perform highly accurate correction of a neutral steering angle on which a latest steering angle, at the time when it is judged that a vehicle is traveling straight, is reflected.

The present invention relates to an electric power steering apparatus and the object of the invention is attained by the electric power steering apparatus including a torque sensor that detects a steering torque of a steering wheel of a vehicle, a steering angle sensor that detects a steering angle, and a speed sensor that detects a traveling speed of the vehicle, the electric power steering apparatus including: straight traveling judging means that judges straight traveling of the vehicle on the basis of the steering torque, the traveling speed, and a steering angle speed that is calculated on the basis of the steering angle; and neutral angle correcting means that corrects an error between an actual neutral angle and a neutral angle, which is indicated by a steering angle detected by the steering angle sensor by correcting the neutral angle indicated by the steering angle, on the basis of the traveling speed after a period, in which the straight traveling judging means judges that the vehicle is traveling straight, continues for a continuous judging time (t0) or more and during a straight traveling continuing period in which the straight foreword traveling judging means continues to judge that the vehicle is traveling straight, under a condition that the straight traveling judging means judges that the vehicle is traveling straight, the neutral angle correcting means sets a reliability coefficient D(V,t), which increases in accordance with the traveling speed V and a straight traveling continuation time t in which the straight traveling judging means continuously judges that the vehicle is traveling straight, and corrects a neutral angle by an arithmetic operation for obtaining a new neutral angle $\theta_k$ by adding a value $D \cdot (\theta_{k-1} - \theta_s)$, which is obtained by multiplying an error $(\theta_{k-1} - \theta_s)$ between a neutral angle $\theta_{k-1}$ corrected last time and a neutral angle $\theta_s$ indicated by a steering angle detected by the steering angle sensor by the reliability coefficient D, to the neutral angle $\theta_{k-1}$ corrected last time.

The object is attained more effectively by the electric power steering device including a wheel rotation speed sensor that detects a wheel rotation speed of a pair of left and right front wheels or rear wheels of the vehicles, wherein the straight traveling judging means judges straight traveling of the vehicles on the basis of the steering torque, the traveling speed, the steering angle speed, and the wheel rotation speed.

The object is attained more effectively by the electric power steering device, wherein the electric power steering device performs straight traveling judgment and correction of the neutral angle after processing a steering torque detected by the torque sensor, a steering angle speed calculated on the basis of a steering angle detected by the steering angle sensor, or a wheel rotation speed detected by the wheel rotation speed sensor through low-pass filters (LPFs) having the same characteristics.

The object is attained more effectively by the electric power steering device including a non volatile memory, wherein the electric power steering device stores the corrected neutral angle $\theta_k$ calculated by the neutral steering angle correcting means in the nonvolatile memory when an ignition key is turned "OFF" and reads out the neutral angle $\theta_k$ from the nonvolatile memory when the ignition key is turned "ON" next time to set the neutral angle $\theta_k$ as an initial value $\theta_{k-1}$ of the neutral steering angle correction arithmetic operation.

German patent publication no. 102 44 070.0 (Volkswagen AG) discloses a device and a method providing steering assistance in electromechanically steered vehicles, according to which steerable vehicle wheels are connected in a driving manner to a steering means (1) and an electric servomotor (2), an assistance angle and/or an assistance moment is/are supplied by the servomotor (2), the assistance angle ($\delta_k$) and/or the assistance moment is/are formed by at least one long-term corrective value ($\delta_{Lk}$) for long-term correction (41) and/or a short-term corrective value ($\delta_{kk}$) for short-term correction (42), and long-term correction (41) and/or short-term correction (42) is/are switched on and/or off according to the driving situation.

BRIEF DESCRIPTION OF THE DRAWINGS

In the accompanying drawings:

FIG.1 is a block diagram showing an embodiment of the present invention;
FIG.2 is a detailed block diagram of a neutral angle correcting means of the present invention;
FIG.3 is a graph showing an example of a characteristic of a reliability coefficient of the present invention;
FIGs.4A to 4F are graphs showing a gain value of a reliability coefficient and a degree of convergence of the present invention; and
FIG.5 is a block diagram showing another embodiment of the straight traveling judging means of the present invention.

DESCRIPTION OF THE PREFERRED EMBODIMENTS

Preferred embodiments of the present invention will be hereinafter explained with reference to the drawings.

Embodiment-1

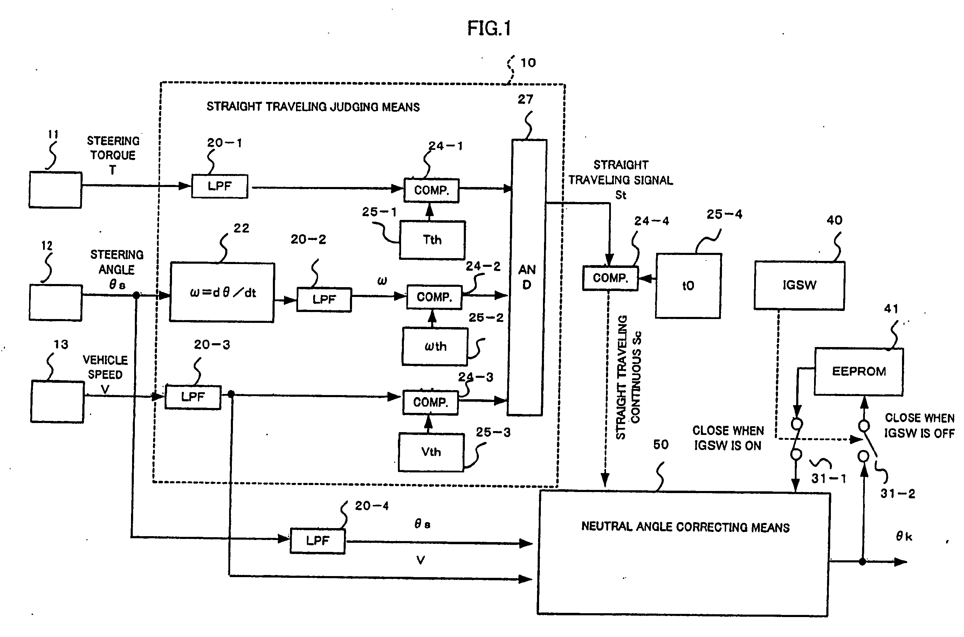

In FIG.1, a straight traveling judging means 10 is respectively inputted with a steering torque T detected by a torque sensor 11, a steering angle $\theta_s$ detected by a steering angle sensor 12, and a vehicle speed V detected by a vehicle speed sensor. An output of the straight traveling judging means 10 is a straight traveling signal St indicating that it is judged that a vehicle is traveling straight. First, the inputted steering torque T and vehicle speed V are respectively inputted to low-pass filters (LPFs) 20-1 and. Here, although the low-pass filters 20-1 and 20-3 are not essential elements of the present invention, more preferable effects can be expected when the low-pass filters are present due to reasons explained later.

The steering angle $\theta_s$ is inputted to a steering angle speed operating section 22 and to a neutral angle correcting means 50 via a low-pass filter 20-4. A steering angle speed $\omega$ is calculated at the steering angle speed operating section 22 by operating a following equation 1 and the steering angle speed $\omega$ is inputted to the low-pass filter 20-2.

$$\text{(Equation 1)}$$

$$\omega = d\theta_s/dt$$

Next, magnitudes of the steering torque T, the steering angle speed $\omega$ and the vehicle speed V are compared with a reference value Tth, a reference value $\omega$th and a reference value Vth at comparators 24-1, 24-2 and 24-3, respectively. A straight traveling judgment is executed from a result of the comparison according to AND conditions at an AND circuit 27.

The steering torque T, which has passed through the low-pass filter 20-1, is inputted to a comparator 24-1, and the comparator 24-1 outputs a result of comparing the steering torque T and the reference value Tth indicated by a setting device 25-1. When the steering torque T is smaller than the reference value Tth, the vehicle is often traveling straight and the comparator 24-1 outputs, for example, a logical value "1". The steering angle speed $\omega$, which is an output of the steering angle speed operating section 22, is inputted to a comparator 24-2 via the low-pass filter 20-2. The comparator 24-2 outputs a result of comparing the steering angle speed $\omega$ and the reference value $\omega$th indicated

by a setting device 25-2. When the steering angle speed ω is smaller than the reference value ωth, the vehicle is often traveling straight and the comparator 24-2 outputs a logical value "1". Further, the vehicle speed V, which has passed through the low-pass filter 20-3, is inputted to a comparator 24-3. The comparator 24-3 outputs a result of comparing the vehicle speed V and the reference value Vth indicated by a setting device 25-3. When the vehicle speed V is higher than the reference value Vth, the vehicle is often traveling straight and the comparator 24-3 outputs a logical value "1".

Then, the straight traveling judging means 10 obtains AND conditions of the all outputs of the comparators 24-1, 24-2 and 24-3 in an AND circuit 27 and outputs the straight traveling signal St as a result of comprehensively judging the outputs from the AND circuit 27. The straight traveling judging means 10 judges that the vehicle is traveling straight when all the outputs of the comparators 24-1, 24-2 and 24-3 are the logical value "1" and outputs the straight traveling signal St of the logical value "1". Otherwise, the straight traveling judging means 10 judges that the vehicle is not traveling straight and outputs the straight traveling signal St of a logical value "0".

The straight traveling signal St is inputted to a comparator 24-4, and the comparator 24-4 judges as the straight traveling and outputs a straight traveling continuation signal Sc when the logical value "1" of the straight traveling signal St, which indicates that the vehicle is traveling straight, continues for time equal to or longer than a continuation judging time "t0" indicated by a setting device 25-4. The straight traveling continuation signal Sc is inputted to the neutral angle correcting means 50.

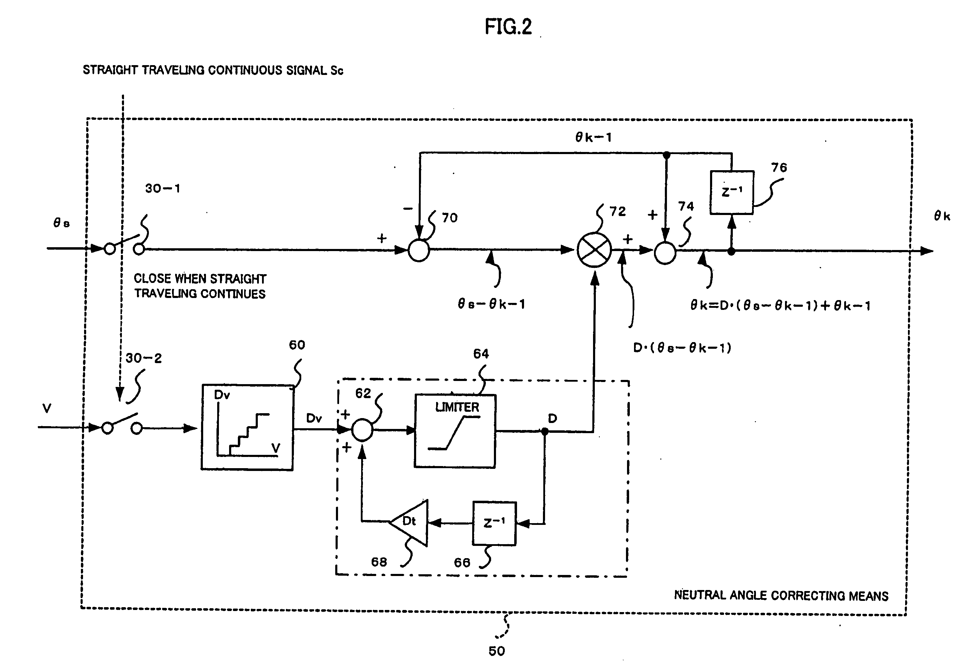

Next, the neutral angle correcting means 50 will be explained with reference to FIG. 2.

First, the steering angle θs detected by the steering angle sensor 12 that is the output of the low-pass filter 20-4, the vehicle speed V detected by the vehicle speed sensor 13 that is the output of the low-pass filter 20-3, and the straight traveling continuation signal Sc outputted from the comparator 24-4 are inputted to the neutral angle correcting means 50. However, the neutral angle correction is required to be carried out under a condition that the vehicle is traveling straight. Therefore, a switch 30-1 for applying the condition is arranged between the low-pass filter 20-4 and a subtracter 70. In addition, a switch 30-2 is arranged between the low-pass filter 20-3 and a Dv-table 60. The switches 30-1 and 30-2 are closed only when the straight traveling continuation signal Sc is present.

Before explaining specific means, a principle of steering angle correction will be explained. Correction of the steering angle θ is performed on the basis of a below equation 2. This means that the neutral angle correcting means 50 executes the equation 2.

$$\text{(Equation 2)}$$

$$\theta_k = (\theta_s - \theta_{k-1}) \cdot D + \theta_{k-1}$$

Here, "$\theta_{k-1}$" is a steering angle corrected last time and "$\theta_k$" is a new steering angle after correcting the steering angle 0 this time. "D" is a reliability coefficient that is basically larger as vehicle speed is higher. The reliability coefficient D is an important element of the present invention and will be explained in detail later

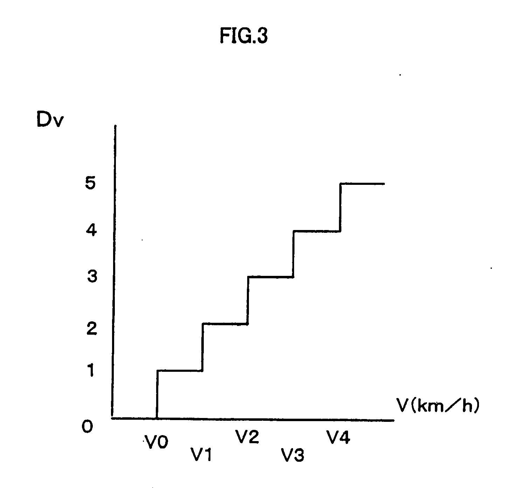

In explaining the neutral angle correction with reference to FIG.2, first, a part of the neutral angle correction relating to the reliability coefficient D will be explained. The vehicle speed V inputted through the switch 30-2 is inputted to the Dv-table 60. Here, the Dv-table is constituted by a reliability basic coefficient Dv that is larger as the vehicle speed V is higher. Basically, the reliability coefficient D is larger as this reliability basic coefficient Dv is larger. An example of the Dv-table is shown in FIG.3. In FIG.3, Dv=1 when a vehicle speed V is V0 or more and V1 or less, Dv=2 when a vehicle speed V is V1 or more and V2 or less, Dv=3 when a vehicle speed V is V2 or more and V3 or less, Dv=4 when a vehicle speed V is V3 or more and V4 or less, and Dv=5 when a vehicle speed V is V4 or more. This is only an example and a table having other characteristics may be prepared.

When the vehicle speed V is inputted to the Dv-table 60, the reliability basic coefficient Dv is outputted in accordance with the relation in FIG.3. The outputted reliability basic coefficient Dv is inputted as one of additional values of an adder 62. An output of the adder 62 is inputted to a limiter 64 and controlled such that an output of the limiter 64, that is, the reliability coefficient D is within a set value. The reliability coefficient D, which is the output of the limiter 64, is inputted to a delay device 66 ($Z^{-1}$). An output of the delay device 66 is multiplied by a gain Dt, and a multiplied result is inputted to the adder 62 and added with the reliability basic coefficient Dv, which is the output of the Dv-table 60, in the adder 62. The reliability basic coefficient Dv concerning a vehicle speed V is integrated in the above way to calculate the reliability coefficient D. The reliability coefficient D is inputted to the multiplier 72.

Next, correction of the steering angle θs detected by the steering angle sensor 12 will be explained. The steering angle θs inputted to the neutral angle correcting means 50 is inputted to the subtracter 70. Another input value to the subtracter 70 is the steering angle $\theta_{k-1}$ subjected to correction arithmetic operation last time that is an output of a delay device 76. Thus, an output of the subtracter 70 is a deviation ($\theta_s - \theta_{k-1}$). The deviation of the output of the subtracter 70 and the reliability coefficient D, which is the output of the limiter 64, are multiplied in a multiplier 72 and a multiplied result $D \cdot (\theta_s - \theta_{k-1})$ is outputted from the multiplier 72. The output $D \cdot (\theta_s - \theta_{k-1})$ of the multiplier 72 is inputted to an adder 74 and added with the steering angle $\theta_{k-1}$ subjected to correction arithmetic operation last time that is the output of the delay device 76. As a result of the arithmetic operation, $\{D \cdot (\theta_s - \theta_{k-1}) + \theta_{k-1}\}$ is outputted. This output value is a corrected new steering angle $\theta k = D \cdot (\theta_s - \theta_{k-1}) + \theta_{k-1}$. This steering angle $\theta k$ is an output of the neutral angle correcting means 50.

Note that, concerning the above corrected new steering angle $\theta k$, it is also possible to apply limitation to a maximum value to be corrected and prevent wrong correction. It is possible to prevent wrong excessive correction by limiting correction of an error of the steering angle sensor to, for example, $\pm 8$ degrees, and limiting correction of an error at the time of attachment to the vehicle to, for example, $\pm 7$ degrees, that is, limiting correction to be within maximum 15 degrees.

In addition, the integration according to the arithmetic operation $D \cdot (\theta_s - \theta_{k-1})$ is performed only when the straight traveling continuation signal Sc is present, that is, only while the straight traveling continues. When the straight traveling continuation signal Sc disappears, the continuation time t is reset to "0". In addition, when the straight traveling continuation signal Sc disappears, the steering angle $\theta k$, which is a result of the arithmetic operation, is stored in storing means such as a RAM and is used as an offset initial value $\theta_{k-1}$ at the time when the straight traveling continuation signal Sc is outputted again next time and the arithmetic operation of the neutral angle correcting means 50 is started.

In the contents of the execution by the neutral angle correcting means 50 explained above, the above equation 2 is executed. What is important in the contents of the arithmetic operation of the neutral angle correcting means 50 is that a reliability coefficient D based on a vehicle speed V is integrated in accordance with straight traveling continuation time Sc.

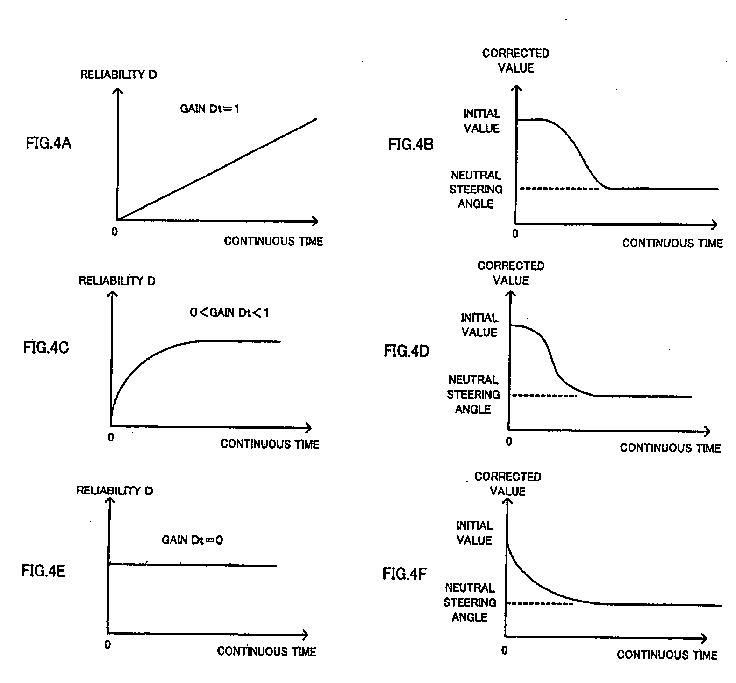

Here, an influence of the gain Dt on the reliability coefficient D will be explained with reference to FIGs.4A to 4F. When the gain Dt is "1", as shown in FIG.4A, the reliability coefficient D simply increases in proportion to straight traveling continuation time Sc. As a result, a steering angle to be corrected converges from an initial value of an arithmetic operation through a process shown in FIG.4B. In this case, when the straight traveling continuation time Sc is short, a steering angle after correction is not affected by the correction significantly. However, when straight traveling continues for a long time, the steering angle is affected by the correction arithmetic operation significantly. When the gain Dt is larger than "0" and smaller than "1", the reliability coefficient D is set to increase rapidly first in accordance with the straight traveling time Sc and saturate when certain time elapses as shown in FIG.4C. The steering angle to be corrected slowly decreases from the initial value and converges to a constant value as shown in FIG.4D. When the gain Dt is "0", the reliability coefficient D is a constant value as shown in FIG.4E, and the steering angle to be corrected decreases from the initial value and converges to a constant value as shown in FIG.4F.

As described above, by the neutral angle correcting means 50, it is possible to adjust the characteristics of the gain Dt and the Dv-table 60 to characteristics preferable for a vehicle and a steering angle sensor to which the gain Dt and the Dv-table 60 are applied.

According to this embodiment-1, the correction arithmetic operation for a neutral steering angle is executed only in a period in which a vehicle speed is high and it is judged that straight traveling continues. Thus, compared with the conventional device, it is judged markedly correctly that a vehicle is actually traveling straight and it is possible to execute correction of a neutral steering angle accurately. In addition, since the vehicle speed sensor and the steering angle sensor are used, there is an excellent advantage that it is possible to execute correction for a neutral steering angle without using information other than information of the electric power steering apparatus.

Embodiment-2

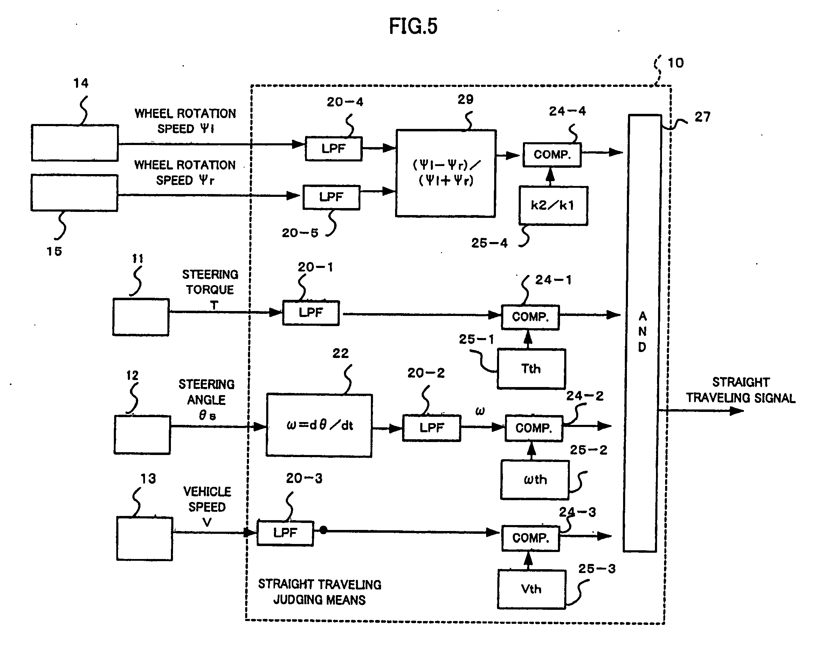

It is possible to judge a straight traveling according to the conditions indicated by the straight traveling judging means 10 shown in FIG.1. However, depending on a vehicle, when a steering wheel is held at a very small steering angle, since the steering torque T is extremely small, it may be misjudged that the vehicle is traveling straight. Thus, a condition of a wheel rotation speed of the vehicle may be added such that straight traveling can be judged surely even when the steering wheel is held at a very small steering angle. An embodiment in that case is shown in FIG.5. In the straight traveling judging means 10 in FIG.5, a judgment condition according to a rotation speed of wheels is added to the straight traveling judging means 10 in FIG.1. Specifically, the condition is a condition satisfying a below equation 3. Here, since a wheel rotation speed varies greatly depending on a vehicle speed, judgment is based on a turning radius.

(Equation 3)

$$|(\Psi l - \Psi r)/(\Psi l + \Psi r)| < (k2/k1)$$

Here, $\Psi l$ and $\Psi r$ are a rotation speed of a left wheel and a rotation speed of a right wheel of front wheels of the vehicle or a rotation speed of a left wheel and a rotation speed of a right wheel of rear wheels of the vehicle, and "k2/k1" is a threshold value for judging straight traveling.

In FIG. 5, the rotation speeds $\Psi l$ and $\Psi r$ detected by a left wheel rotation speed sensor 14 for detecting the rotation speed $\Psi l$ of the left wheel of the front wheels of the vehicle and a right wheel rotating speed sensor 15 for detecting the rotation speed $\Psi r$ of the right wheel, respectively, are inputted to the straight traveling judging means 10 and inputted to the low-pass filters 20-4 and 20-5, respectively. The rotation speeds $\Psi l$ and $\Psi r$, which have passed through the low-pass filters 20-4 and 20-5, are inputted to a turn judging operating section 29 and $|(\Psi l-\Psi r)/(\Psi l+\Psi r)|$ is outputted from the turn judging operating section 29. This arithmetic operation result $|(\Psi l-\Psi r)/(\Psi l+\Psi r)|$ and the reference value "k2/k1" indicated by the setting device 25-4 are inputted to the comparator 24-4. The comparator 24-4 outputs a result of comparing magnitude of $|(\Psi l-\Psi r)/(\Psi l+\Psi r)|$ and k2/k1. When the equation 3 is established, the comparator 24-4 outputs a logical value "1". As a wheel speed, the straight traveling means 10 judges that the vehicle is traveling straight. Other than the output of the comparator 24-4, outputs of the comparators 24-1, 24-2 and 24-3 are inputted to an AND circuit 27. When all the outputs are "1", the straight traveling judging means 10 judges that the vehicle is traveling straight.

In this way, since the condition of a rotation speed of wheels is added as a condition for the straight traveling judgment, it can be expected that there is an advantage that the straight traveling judgment can be performed surely even when an angle for holding a steering wheel is very small.

In the embodiment-2 described above, detection values detected by the steering sensor 11, the steering angle sensor 12, the vehicle speed sensor 13, the left wheel rotation speed sensor 14 and the right wheel rotation speed sensor 15 are used through the low-pass filters 20-1, 20-2, 20-3, 20-4 and 20-5. As an example of characteristics of the low-pass filters, when a transmission function is set as $1/(1+T \cdot s)$ and a cutoff frequency is set as 0.5 Hz, $T=1/(2\pi \times 0.5) =0.32$ [s]. A reason for this is as described below. Although the basic advantages of the present invention can be expected even if the low-pass filters are not used, when the invention is put to practical use, influences of correction steering, disturbances and the like affect an arithmetic operation for correction significantly and a neutral steering angle is corrected by mistake because of the correction steering and the disturbances. As a result, it is likely that a neutral steering angle significantly different from an actual neutral steering angle is calculated. Thus, it is possible to eliminate the influences of the correction steering and the disturbances by arranging the low-pass filters. In addition, when a reference value for the straight traveling judgment is set strict, it is judged extremely rarely that a vehicle is traveling straight and opportunities for correction of a neutral steering angle extremely decrease. However, since opportunities for judging that a vehicle is traveling straight increase by arranging the low-pass filters, there is an advantage that a more accurate neutral steering angle can be detected earlier.

Embodiment-3

Next, a measure for improvement concerning an initial value of a correction arithmetic operation will be explained with reference to FIG.1.

Conventionally, when an ignition key is turned "OFF", since a corrected value at that point is not stored, a predetermined value is substituted as the initial value $\theta_{k-1}$ for an arithmetic operation for correction to perform the correction arithmetic operation or the like. Thus, there is a problem in that it takes time until a neutral steering angle subjected to the correction arithmetic operation converges. Therefore, in the present invention, a corrected value subjected to the correction arithmetic operation is stored in a nonvolatile memory when the ignition key is turned "OFF" and the corrected value is read out and used as an initial value when the ignition key is turned "ON" next time such that a neutral steering angle subjected to the correction arithmetic operation converges early.

This embodiment-3 will be explained with reference to FIG.1. First, an EEPROM (Electrically Erasable and programmable ROM) 41, which is an example of the nonvolatile memory, is connected to the neutral angle correcting means 50 through switches 31-1 and 31-2. To explain this more in detail, an output of the neutral angle correcting means 50 is inputted to the EEPROM 41 through the switch 31-2 and an output of the EEPROM 41 is inputted to the neutral angle correcting means 50 through the switch 31-1. The switch 31-1 is a switch that closes for a while when the ignition key 40 is turned "ON". The switch 31-2 is a switch that closes for a while when the ignition key 40 is turned "OFF".

In such a constitution, when the ignition key 40 is turned "OFF", the corrected steering angle $\theta_k$, which is the output of the neutral angle correcting means 50, is inputted to the EEPROM 41 through the switch 31-2 and stored therein. Since the EEPROM 41 is the nonvolatile memory, it is possible to keep the steering angle $\theta_k$ stored even if the ignition key 40 is turned "OFF" to stop power supply. When the ignition key 40 is turned "ON" next time, the EEPROM 41 outputs a value of the stored steering angle $\theta_k$ of the last time to the neutral angle correcting means 50 through the switch 31-1. Therefore, the neutral angle correcting means 50 starts the correction arithmetic operation using the steering angle $\theta_k$ of the last time as an initial value. As a result, the correction arithmetic operation converges early and a corrected new steering angle $\theta_k$ can be detected fast.

In the control for the electric power steering apparatus that is controlled on the basis of the steering torque T detected by the torque sensor 11, the electric power steering apparatus is controlled using the steering angle $\theta_k$ that is read from the EEPROM 41 when the ignition key 40 is turned "ON".

Note that, if an initial value at the time of shipment or the like of the EEPROM 40 is set to "0", safe steering can be expected because the steering angle $\theta_k$ subjected to the correction arithmetic operation does not take an abnormal value.

As explained above, if the present invention is used, the correction arithmetic operation for a neutral steering angle is executed only in a period in which a vehicle speed is high and it is judged that the straight traveling continues. Thus, compared with the conventional device, it is judged markedly correctly that a vehicle is actually traveling straight and it is possible to execute correction of a neutral steering angle accurately.

According to the electric power steering apparatus of the present invention, the electric power steering apparatus performs correction of a neutral steering angle on the basis of a steering angle detected by the steering angle sensor and a traveling speed only in a period in which straight traveling continues. Thus, the correction is performed on condition that a vehicle speed is high and a result indicating that a vehicle is traveling straight continues. Therefore, compared with the conventional apparatus, it is judged more correctly that the vehicle is actually traveling straight and it is possible to execute correction of a neutral steering angle accurately. In addition, the vehicle speed sensor and the steering angle sensor used for correction arithmetic operation are sensors that are mounted on the electric power steering apparatus originally and the vehicle speed sensor is provided in the vehicle as standard equipment. Thus, it is possible to realize the correction of a neutral steering angle without mounting special devices on the vehicle.

**Claims**

1. An electric power steering apparatus including a torque sensor (11) that detects a steering torque (T) of a steering wheel of a vehicle, a steering angle sensor (12) that detects a steering angle ($\theta_s$), and a speed sensor (13) that detects a traveling speed (V) of the vehicle, the electric power steering apparatus comprising:

   a straight traveling judging means (10) that judges a straight traveling of the vehicle on the basis of the steering torque (T), the traveling speed (V), and a steering angle speed ($\omega$) that is calculated on the basis of the steering angle ($\theta_s$); and
   a neutral angle correcting means (50) that corrects an error between an actual neutral angle and a neutral angle indicated by a steering angle ($\theta_s$) detected by the steering angle sensor (12) by correcting the neutral angle indicated by the steering angle on the basis of the traveling speed (V) after a period, in which the straight traveling judging means (10) judges that the vehicle is traveling straight, continues for a continuous judging time (t0) or more and during a straight traveling continuing period in which the straight traveling judging means (10) continues to judge that the vehicle is traveling straight; and
   under a condition that the straight traveling judging means (10) judges that the vehicle is traveling straight, the neutral angle correcting means (50) sets a reliability coefficient D(V,t), which increases in accordance with the traveling speed V and a straight traveling continuation time t in which the straight traveling judging means (10) continuously judges that the vehicle is traveling straight, and corrects a neutral angle by an arithmetic operation for obtaining a new neutral angle $\theta_k$ by adding a value $D \cdot (\theta_s - \theta_{k-1})$,
   which is obtained by multiplying an error ($\theta_s - \theta_{k-1}$) between a neutral angle $\theta_{k-1}$ corrected last time and a neutral angle $\theta_s$ indicated by a steering angle detected by the steering angle sensor (12) by the reliability coefficient D, to the neutral angle $\theta_{k-1}$ corrected last time.

2. An electric power steering apparatus according to claim 1, comprising a wheel rotation speed sensor (14, 15) that detects a wheel rotation speed ($\Psi l$, $\Psi r$) of a pair of left and right front wheels or rear wheels of the wheels, wherein the straight traveling judging means (10) judges straight traveling of the wheels on the basis of the steering torque (T), the traveling speed (V), the steering angle speed ($\omega$), and the wheel rotation speed ($\Psi l$, $\Psi r$).

3. An electric power steering apparatus according to claim 1 or 2, wherein the electric power steering apparatus performs straight traveling judgment and correction of the neutral angle after processing a steering torque (T) detected by the torque sensor (11), a steering angle speed ($\omega$) calculated on the basis of a steering angle ($\theta_s$) detected by the steering angle sensor (12), or a wheel rotation speed ($\Psi l$, $\Psi r$) detected by the wheel rotation speed sensor (14, 15) through low-pass filters (20-1, 20-2, 20-4, 20-5) having the same characteristics.

4. An electric power steering apparatus according to claim 1 comprising a non volatile memory (41), wherein the electric power steering apparatus stores the corrected neutral angle $\theta_k$ calculated by the neutral steering angle correcting means (50) in the nonvolatile memory (41) when an ignition key (40) is turned OFF and reads out the neutral angle $\theta_k$ from the nonvolatile memory (41) when the ignition key (40) is turned ON next time to set the neutral angle $\theta_k$ as an initial value $\theta_{k-1}$ of the neutral steering angle correction arithmetic operation.

5. An electric power steering apparatus according to claim 4, wherein an initial value of the neutral angle $\theta_k$ stored in the nonvolatile memory (41) is "0".

**Patentansprüche**

1. Elektrische Servolenkvorrichtung mit einem Drehmomentsensor (11), der ein Lenkmoment (T) eines Lenkrads eines Fahrzeugs erfasst, mit einem Lenkwinkelsensor (12), der einen Lenkwinkel ($\theta_s$) erfasst, und einem Geschwindigkeitssensor (13), der eine Fahrgeschwindigkeit (V) des Fahrzeugs erfasst, wobei die elektrische Servolenkvorrichtung umfasst:

eine Geradeausfahrt-Beurteilungseinrichtung (10), die eine Geradeausfahrt des Fahrzeugs auf der Grundlage des Lenkmoments (T), der Fahrgeschwindigkeit (V) und einer Lenkwinkelgeschwindigkeit ($\omega$), die auf der Grundlage des Lenkwinkels ($\theta_s$) berechnet wird, beurteilt;
und eine Neutralwinkel-Korrektureinrichtung (50), die ein Fehler zwischen einem tatsächlichen neutralen Winkel und einem neutralen Winkel, der durch einen Lenkwinkel ($\theta_s$), der von dem Lenkwinkelsensor (12) erfasst wird, angezeigt wird, korrigiert, durch Korrigieren des neutralen Winkels, der durch den Lenkwinkel angezeigt wird, auf der Basis der Fahrgeschwindigkeit (V) nach einer Periode, in der die Geradeausfahrt-Beurteilungseinrichtung (10) beurteilt, dass das Fahrzeug geradeaus fährt, während einer kontinuierlichen Beurteilungszeit (t0) oder mehr und während einer Geradeausfahrt-Fortsetzungsperiode, in der die Geradeausfahrt-Beurteilungseinrichtung (10) weiterhin beurteilt, dass das Fahrzeug geradeaus fährt, weitermacht; und unter einer Bedingung, dass die Geradeausfahrt-Beurteilungseinrichtung (10) beurteilt, dass das Fahrzeug geradeaus fährt, setzt die Neutralwinkel-Korrektureinrichtung (50) einen Zuverlässigkeitskoeffizienten D(V, t) fest, der gemäß der Fahrgeschwindigkeit V und einer Geradeausfahrt-Fortsetzungszeit t, während der die Geradeausfahrt-Beurteilungseinrichtung (10) fortlaufend beurteilt, dass das Fahrzeug geradeausfährt, anwächst, und korrigiert einen neutralen Winkel durch eine arithmetische Operation zum Erhalten eines neuen neutralen Winkels ($\theta_k$) durch Addieren eines Werts $D \cdot (\theta_s - \theta_{k-1})$, der erhalten wird durch Multiplizieren eines Fehlers ($\theta_s - \theta_{k-1}$) zwischen einem neutralen Winkel $\theta_{k-1}$, der beim letzten Mal korrigiert worden ist, und einem neutralen Winkel $\theta_s$, der durch einen Steuerwinkel angezeigt wird, der durch den Steuerwinkelsensor (12) erfasst wird, durch den Zuverlässigkeitskoeffizienten D, zu dem neutralen Winkel $\theta_{k-1}$, der beim letzten Mal korrigiert worden ist.

2. Elektrische Servolenkvorrichtung nach Anspruch 1, mit einem Raddrehungsgeschwindigkeitssensor (14, 15), der eine Raddrehungsgeschwindigkeit ($\Psi l$, $\Psi r$) eines Paares von linken und rechten Vorderrädern oder Hinterrädern der Räder erfasst, wobei die Geradeausfahrt-Beurteilungseinrichtung (10) die Geradeausfahrt der Räder auf der Basis des Lenkmoments (T), der Fahrgeschwindigkeit (V), der Steuerwinkelgeschwindigkeit ($\omega$) und der Raddrehungsgeschwindigkeit ($\Psi l$, $\Psi r$) beurteilt.

3. Elektrische Servolenkvorrichtung nach Anspruch 1 oder 2, **dadurch gekennzeichnet, dass** die elektrische Servolenkvorrichtung eine Beurteilung der Geradeausfahrt und eine Korrektur des neutralen Winkels ausführt, nach Verarbeitung eines Lenkmoments (T), das von dem Drehmomentsensor (11) erfasst wird, einer Lenkwinkelgeschwindigkeit ($\omega$), die auf der Basis eines Lenkwinkels ($\theta_s$), der von dem Lenkwinkelsensor (12) erfasst wird, berechnet wird, oder einer Raddrehungsgeschwindigkeit ($\Psi l$, $\Psi r$), die von dem Raddrehungsgeschwindigkeitssensor (14, 15) erfasst wird, durch Tiefpassfilter (20-1, 20-2, 20-4, 20-5) mit den gleichen Charakteristiken.

4. Elektrische Servolenkvorrichtung nach Anspruch 1, umfassend einen nicht flüchtigen Speicher (41), wobei die elektrische Servolenkvorrichtung den korrigierten neutralen Winkel $\theta_k$, der von der Neutrallenkwinkel-Korrektureinrichtung (50) berechnet worden ist, in dem nicht flüchtigen Speicher (41) speichert, wenn ein Zündschlüssel (40) auf AUS gedreht wird, und den neutralen Winkel $\theta_k$ von dem nicht flüchtigen Speicher (41) ausliest, wenn der Zündschlüssel (40) das nächste Mal auf EIN gedreht wird, um den neutralen Winkel $\theta_k$ als einen Anfangswert $\theta_{k-1}$ der arithmetischen Operation zur Korrektur des neutralen Lenkwinkels zu setzen.

5. Elektrische Servolenkvorrichtung nach Anspruch 4, **dadurch gekennzeichnet, dass** ein Anfangswert des neutralen Winkels $\theta_k$, der in dem nicht flüchtigen Speicher (41) gespeichert ist, "0" ist.

**Revendications**

1. Appareil de direction assistée électrique comprenant un capteur (11) de couple qui détecte un couple (T) de direction d'un volant de direction d'un véhicule, un capteur (12) d'angle de braquage qui détecte un angle ($\theta_s$) de braquage et un capteur (13) de vitesse qui détecte une vitesse de déplacement (V) du véhicule, l'appareil de direction assistée électrique comprenant :

   un moyen (10) d'estimation de déplacement en ligne droite qui estime un déplacement en ligne droite du véhicule sur la base du couple (T) de direction, de la vitesse de déplacement (V), et d'une vitesse ($\omega$) d'angle de braquage qui est calculée sur la base de l'angle ($\theta_s$) de braquage ; et
   un moyen (50) de correction d'angle neutre qui corrige une erreur entre un angle neutre réel et un angle neutre indiqué par un angle ($\theta_s$) de braquage détecté par le capteur (12) d'angle de braquage en corrigeant l'angle neutre indiqué par l'angle de braquage sur la base de la vitesse (V) de déplacement après une durée, dans laquelle le moyen (10) d'estimation de déplacement en ligne droite estime que le véhicule se déplace en ligne droite, continue pendant un temps (t0) d'estimation continu ou plus et pendant une durée continue de déplacement en ligne droite pendant laquelle le moyen (10) d'estimation de déplacement en ligne droite continue à estimer que le véhicule se déplace en ligne droite ; et au cas où le moyen (10) d'estimation de déplacement en ligne droite estime que le véhicule se déplace en ligne droite, le moyen (50) de correction d'angle neutre règle un coefficient D (V, t) de fiabilité, qui augmente selon la vitesse V de déplacement et un temps t de continuation de déplacement en ligne droite dans lequel le moyen (10) d'estimation de déplacement en ligne droit estime de manière continue que le véhicule se déplace en ligne droite, et corrige un angle neutre par une opération arithmétique pour obtenir un nouvel angle neutre $\theta_k$ en ajoutant un valeur D ($\theta_s$ - $\theta_{k-1}$), qui est obtenue en multipliant une erreur ($\theta_s$ - $\theta_{k-1}$) entre un dernier angle neutre $\theta_{k-1}$ corrigé et un angle neutre $\theta_s$ indiqué par un angle de braquage détecté par le capteur (12) d'angle de braquage par le coefficient D de fiabilité, sur le dernier angle neutre $\theta_{k-1}$ corrigé.

2. Appareil de direction assistée électrique selon la revendication 1, comprenant un capteur (14, 15) de vitesse de rotation de roue qui détecte une vitesse ($\Psi 1$, $\Psi r$) de rotation de roue d'une paire de roues avant gauche et droite ou de roues arrière de roues, dans lequel le moyen (10) d'estimation de déplacement en ligne droite estime le déplacement en ligne droite des roues sur la base du couple (T) de direction, la vitesse (V) de déplacement, la vitesse ($\omega$) d'angle de braquage, et la vitesse ($\Psi 1$, $\Psi r$) de rotation de roue.

3. Appareil de direction assistée électrique selon la revendication 1 ou la revendication 2, dans lequel l'appareil de direction assistée électrique effectue l'estimation et la correction de déplacement en ligne droite de l'angle neutre après avoir traité un couple (T) de direction détecté par le capteur (11) de couple, une vitesse ($\omega$) d'angle de braquage calculée sur la base d'un angle ($\theta_s$) de braquage détecté par le capteur (12) d'angle de braquage, ou une vitesse ($\Psi 1$, $\Psi r$) de rotation de roue détectée par le capteur (14, 15) de vitesse de rotation de roue à travers des filtres passe-bas (20-1, 20-2, 20-4, 20-5) ayant les mêmes caractéristiques.

4. Appareil de direction assistée électrique selon la revendication 1 comprenant une mémoire non volatile (41), dans lequel l'appareil de direction assistée électrique stocke l'angle neutre corrigé $\theta_k$ calculé par le moyen (50) de correction d'angle de braquage neutre dans la mémoire non-volatile (41) quand une clé (40) de contact est éteinte et lit l'angle neutre $\theta_k$ dans la mémoire non-volatile (41) lorsque la clé (40) de contact est allumée la fois suivante pour régler l'angle neutre $\theta_k$ comme une valeur initiale $\theta_{k-1}$ de l'opération arithmétique de correction d'angle de braquage neutre.

5. Appareil de direction assistée électrique selon la revendication 4, dans lequel une valeur initiale de l'angle neutre $\theta_k$ stockée dans la mémoire non volatile (41) est « 0 ».

FIG.1

STRAIGHT TRAVELING JUDGING MEANS

STEERING TORQUE T

STEERING ANGLE θs

VEHICLE SPEED V

$\omega = d\theta/dt$

LPF

LPF

LPF

LPF

COMP.

COMP.

COMP.

COMP.

AND

Tth

ωth

Vth

t0

IGSW

EEPROM

NEUTRAL ANGLE CORRECTING MEANS

STRAIGHT TRAVELING SIGNAL St

STRAIGHT TRAVELING CONTINOUS Sc

CLOSE WHEN IGSW IS ON

CLOSE WHEN IGSW IS OFF

θs

V

θk

EP 1 627 799 B1

# FIG.2

$\theta k-1$

76

30-1

$\theta s$

70

72

74

$z^{-1}$

$\theta k$

CLOSE WHEN STRAIGHT
TRAVELING CONTINUES

$\theta s-\theta k-1$

$\theta k=D\cdot(\theta s-\theta k-1)+\theta k-1$

$D\cdot(\theta s-\theta k-1)$

30-2

60

64

V

Dv

Dv

62

LIMITER

D

V

Dt

$z^{-1}$

68

66

NEUTRAL ANGLE CORRECTING MEANS

50

EP 1 627 799 B1

EP 1 627 799 B1

FIG.3

FIG.4A

FIG.4B

FIG.4C

FIG.4D

FIG.4E

FIG.4F

# FIG.5

WHEEL ROTATION SPEED Ψl

WHEEL ROTATION SPEED Ψr

$(\Psi l - \Psi r)/(\Psi l + \Psi r)$

COMP.

k2/k1

STEERING TORQUE T

LPF

COMP.

Tth

STEERING ANGLE θs

$\omega = d\theta/dt$

LPF

ω

COMP.

ωth

VEHICLE SPEED V

LPF

COMP.

Vth

STRAIGHT TRAVELING JUDGING MEANS

AND

STRAIGHT TRAVELING SIGNAL

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3235521 B

- DE 10244070